# EUROPEAN PATENT APPLICATION

(11) **EP 2 693 336 A1**
(43) Date of publication of application: **05.02.2014**
(21) Application number: 12765236.0
(22) Date of filing: 07.03.2012
(51) Int. Cl.: G06F 9/50, G06F 13/00

(54) **VIRTUAL MACHINE ADMINISTRATION SYSTEM, AND VIRTUAL MACHINE ADMINISTRATION METHOD**

(30) Priority: 28.03.2011 JP 2011070481
(71) Applicant: NEC Corporation, Tokyo 108-8001 (JP)
(72) Inventor: OKAMOTO Hideaki, Tokyo 108-8001 (JP)
(74) Representative: Vossius & Partner
(86) International application number: PCT/JP2012/055877
(87) International publication number: WO 2012/132808

(57) **Abstract**

A migration of a virtual machine is performed to the nearest virtual-machine-operating server derived from location coordinates information of a client terminal, to establish a connection with a virtual-machine-operating server subjected to a reduced influence of the line delay. Specifically, a location optimization server on the network manages virtual-machine-operating servers on which a virtual machine providing a server for the client terminal operates, and orders a migration of the virtual machine to a destination virtual-machine-operating server selected depending on the location coordinates information related to the client terminal. In this operation, the location optimization server issues instructions related to the migration of the virtual machine to both of the virtual-machine-operating server on which the virtual machine is currently operating and the destination virtual-machine-operating server.

## Description

### Technical Field

The present invention relates to a virtual machine management system, more particularly, to a virtual machine management system in a thin client system.

### Background Art

Recently, systems called "thin client", in which computers (clients) used by employees and the like are only provided with minimum necessary functions, including display, input and so on, and a server performs a unified management for resources, such as application software and files, have become popular as information systems for enterprise use. In a thin client system, a computer (client) used by an employee and the like is called "thin client terminal".

In a screen forwarding type thin client system, which is a sort of conventional thin client systems, a server uses virtual machines (VMs) to realize the desktop environments (such as operating systems, application software and files) in order to provide desktop environments for many thin client terminals. Accordingly, the provided desktop environments are virtual desktop environments. Each thin client terminal can use the desktop environment corresponding to the thin client terminal by accessing the virtual machine corresponding to the thin client terminal.

When a thin client using a virtual machine operating on a certain server is moved from the current installation location to a different installation location, however, this may make it impossible to keep a stable line quality, because the connection distance from the thin client terminal to the server becomes relatively long. In this case, a comfortable desktop environment cannot be provided.

Furthermore, conventional thin client systems are adapted to migration (that is, transfer or transformation of programs and data) of virtual machines among servers. For example, techniques related to live migration (or non-stop migration) of virtual machines are known in the art. Migration of virtual machines in a conventional thin client system is, however, performed with disregard to the connection distance between thin client terminals and servers.

### <Patent Literature 1>

It should be noted that, as a related art, patent literature 1 (JP H10-247177 A) discloses one example of conventional server environment migration methods and server network systems.

This server network system includes a communication network, terminals operating on clients, a DTF management server, group management servers and contents servers.

In the network system thus constructed, each user is verified on the network on the basis of an identifier which is inputted from a terminal of a migration destination terminal and uniquely identifies the user. A search is performed over the network for a list of licensed applications and a logical configuration of accessible workfiles. A search is performed for a contents server in which the applications and workfiles which are found by the search are currently stored. A search for a contents server which is suitable for booting these applications and workfiles is performed over the network on the basis of the identifier of the migration destination client. These applications and workfiles are moved to the contents server found by the search. The desktop is built by displaying on the migration destination terminal of the user.

### Citation List

### Patent Literature

### [Patent Literature 1]

Japanese Patent Application Publication No. H10-247177 A

### Non-Patent Literature

### [Non-Patent Literature 1]

"OpenFlow Switch Specification, Version 1.0.0", [online], December 31, 2009, Internet (URL:http://www.openflowswitch.org/documents/openflow-spec-v1.0.0.pdf)

### Summary of the Invention

The screen forwarding type thin client system, which is a sort of conventional thin client systems, cannot provide a comfortable desktop environment when a stable line quality cannot be kept due to a relatively long connection distance from the thin client terminal to the server.

An objective of the present invention is to provide a virtual machine management system which determines and manages the migration destination of a virtual machine on the basis of the connection distances between client terminals and servers, in order to solve the above-described problem.

A virtual machine management system according to the present invention includes: a client terminal; virtual-machine-operating servers on which a virtual machine providing a service for the client terminal operates; and a location optimization server which orders a migration of the virtual machine to a destination virtual-machine-operating server selected depending on location coordinates information related to the client terminal.

The location optimization server includes: a device configured to manage virtual-machine-operating servers on which a virtual machine providing a service for a client terminal operates; and a device configured to order a migration of the virtual machine to a destination virtual-machine-operating server selected depending on location coordinate information related to the client terminal.

A client terminal according to the present invention includes: a device configured to obtain location coordinates information thereof and to make an inquiry to a location optimization server for a destination virtual-machine-operating server, on the basis of the location coordinates information; a device configured to receive listing information indicative of candidates of the destination virtual-machine-operating server from the location optimization server; and a device configured to specify the destination virtual-machine-operating server based on the listing information and to make a request to the location optimization server for a migration of a virtual machine to the specified destination virtual-machine-operating server.

A computer-implemented virtual machine management method includes: managing virtual-machine-operating servers on which a virtual machine providing a service for a client terminal operates; and ordering a migration of the virtual machine to a destination virtual-machine-operating server selected depending on location coordinates information related to the client terminal.

A program according to the present invention causes a computer to perform steps of: obtaining location coordinates information thereof to make an inquiry to a location optimization server about a destination virtual-machine-operating server, on the basis of the location coordinates information; receiving listing information indicative of candidates of a destination virtual-machine-operating server from the location optimization server; and specifying a destination virtual-machine-operating server based on the listing information to make a request to the location optimization server for a migration of a virtual machine to the specified destination virtual-machine-operating server. The program according to the present invention may be stored in a storage device or a recording medium.

The present invention, which achieves a migration of a virtual machine to the most closely located virtual-machine-operating server derived from the location coordinates information of a client terminal, allows connection to a virtual-machine-operating server having a reduced influence of the line delay.

### Brief Description of Drawings

FIG. 1A is a diagram showing an exemplary configuration of a virtual machine management system according to a first exemplary embodiment of the present invention;
FIG. 1B is a diagram for explaining details of a thin client terminal;
FIG. 1C is a diagram for explaining details of a virtual-machine-operating server;
FIG. 1D is a diagram for explaining details of a location optimization server (LO server);
FIG. 2 is a diagram for explaining details of an exemplary configuration of a server table;
FIG. 3 is a diagram for explaining details of an exemplary configuration of a connection destination candidate server table;
FIG. 4 is the first diagram for explaining an implementation example of the first exemplary embodiment of the present invention;
FIG. 5 is the second diagram for explaining the implementation example of the first exemplary embodiment of the present invention;
FIG. 6 is the third diagram for explaining the implementation example of the first exemplary embodiment of the present invention;
FIG. 7 is the fourth diagram for explaining the implementation example of the first exemplary embodiment of the present invention;
FIG. 8 is the fifth diagram for explaining the implementation example of the first exemplary embodiment of the present invention;
FIG. 9A is a sequence diagram showing the beginning stage of the operation of the virtual machine management system;
FIG. 9B is a sequence diagram showing the intermediate stage of the operation of the virtual machine management system;
FIG. 9C is a sequence diagram showing the final stage of the operation of the virtual machine management system;
FIG. 10 is a sequence diagram showing the operation in a modification example of the first exemplary embodiment of the present invention;
FIG 11A is a diagram showing an exemplary configuration of a virtual machine management system according to a second exemplary embodiment of the present invention;
FIG. 11B is a diagram for explaining details of a thin client terminal;
FIG. 11C is a diagram for explaining details of a location optimization server (LO server);
FIG. 11D is a diagram for explaining details of a controller; and
FIG. 12 is a diagram for explaining an implementation example of the second exemplary embodiment of the present invention.

### Description of Exemplary Embodiments

### <First Exemplary Embodiment>

In the following, a description is given of a first exemplary embodiment of the present invention with reference to the attached drawings.

### [System Configuration]

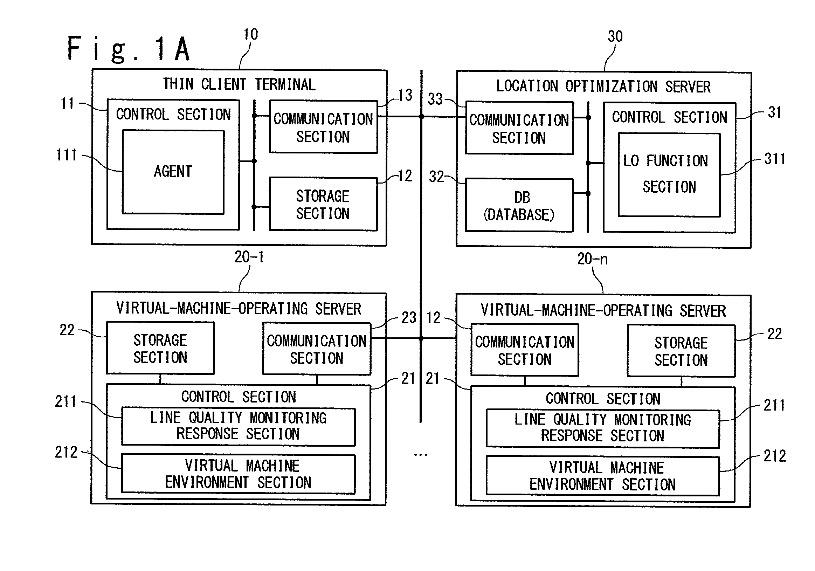

A description is given below of an exemplary configuration of a virtual machine management system according to a first exemplary embodiment of the present invention with reference to FIG. 1A.

The virtual machine management according to the first embodiment of the present invention includes: thin client terminals 10, virtual-machine-operating servers 20 (20-i, where i = 1 to n, n being an arbitrary number), and a location optimization server (LO server) 30.

The thin client terminals 10 are each a terminal apparatus which accesses virtual machines (VMs) operating on any of the virtual-machine-operating servers 20 (20-i, where i = 1 to n). The thin client terminals are portable terminal apparatuses and the installation location thereof may be moved.

The virtual-machine-operating servers 20 (20-i, where i = 1 to n) are server apparatuses installed in data centers, on which virtual machines providing web services, such as desktop environments (OS, application software, files and so on), operate.

The location optimization server (LO server) 30 is a server apparatus which collects information of virtual-machine-operating servers 20 (20-i, where i = 1 to n) which are considered as having an environment suitable as migration destinations of virtual machines, and holds listing information indicative of such virtual-machine-operating servers 20 (20-i, where i = 1 to n)

The thin client terminals 10, the virtual-machine-operating servers 20 (20-i, where i = 1 to n) and the location optimization server (LO server) 30 are connected via a network. Each of the thin client terminals 10, the virtual-machine- operating servers 20 (20-i, where i = 1 to n) and the location optimization server (LO server) 30 is a physical node existing on the physical network.

### [Configuration of Thin Client Terminal]

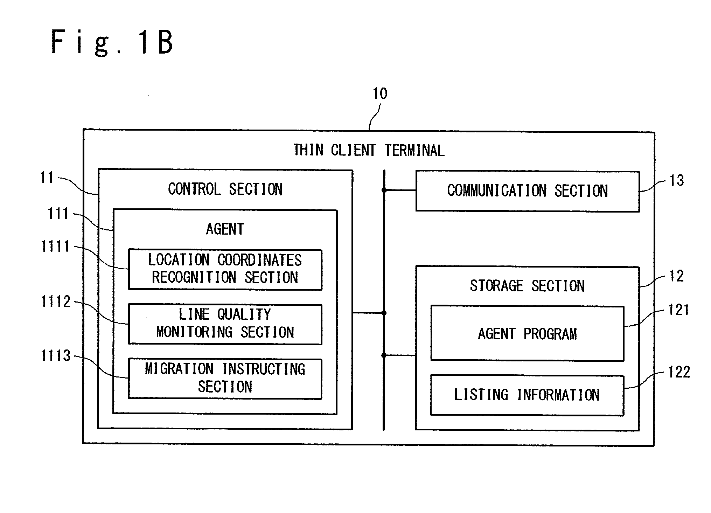

A description is given below of an exemplary configuration of a thin client terminal 10 with reference to FIG. 1B.

The thin client terminal 10 includes a control section 11, a storage section 12 and a communication section 13.

The control section 11 performs an overall control of the internal structure of the thin client terminal 10.

The storage section 12 stores programs and various data.

The communication section 13 performs external communications via the network.

### [Details of Control Section of Thin Client Terminal]

Next, a description is given of details of the control section 11 of the thin client terminal 10.

The control section 11 is installed with an agent 111.

The agent 111 is application software which is operated on the thin client terminal 10. The agent 11 permanently resides on the thin client terminal 10

When executing the agent 111, the control section 11 provides functions as a location coordinates recognition section 1111, a line quality monitoring section 1112 and a migration instructing section 1113. In other words, the control section 11 functions as the location coordinates recognition section 1111, the line quality monitoring section 1112 and the migration instructing section 1113 in accordance with the agent 111.

It should be noted that the agent 111 is not limited to software; the agent 111 may be a dedicated device. In this case, the agent 111 formed as a dedicated device includes a location coordinates recognition section 1111, a line quality monitoring section 1112 and a migration instructing section 1113.

The location coordinates recognition section 1111, by using a device which can specify the physical location coordinates of the thin client terminal 10, obtains the specified location coordinates in the form of numeric values. Examples of the device which can specify the physical location coordinates may include a GPS (global positioning system) receiver and the like. Also, the location coordinates recognition section 1111 may specify the physical location coordinates of an intermediary apparatus, such as a router and a base station, from identification information (or the location) of the intermediary apparatus by using a usual communication device, and calculate the physical location coordinates of the thin client terminal 10 on the basis of the physical location coordinates of the intermediary apparatus. In this case, a table which correlates identification information (or the location) of the intermediary apparatus with location coordinates may be prepared. Also, the location coordinates recognition section 1111 may determine the physical location coordinates of the thin client terminal 10 as the physical location coordinates of the nearest intermediary apparatus.

The line quality monitoring section 1112 measures and takes statistics of the line quality (that is, the line delay and bandwidth). For example, the line quality monitoring section 1112 measures the line delay to the virtual-machine- operating servers 20 (20-i, where i = 1 to n) by sending commands, such as "ICMP (internet control message protocol) ping" (that is, the ping command of the ICMP packet). Also, the line quality monitoring section 1112 measures the communication bandwidth by taking statistics of the amount of the communication packets carried over the communication section 13.

The migration instructing section 1113 issues orders for a migration (that is, transfer and transformation of programs and data) to a destination virtual-machine-operating server 20 (20-i, where i = 1 to n) to the location optimization server (LO server) 30.

### [Details of Storage Section of Thin Client Terminal]

Next, a description is given of details of the storage section 12 of the thin client terminal 10.

The storage section 12 stores an agent program 121 and listing information 122.

The agent program 121 is an executable program of the agent 111. The control section 11 starts the agent 111 by reading the agent program 121 from the storage section 12 and executing the agent program 121.

The listing information 122 is information exchanged with the location optimization server (LO server) 30 and related to virtual-machine-operating servers 20 (20-i, where i = 1 to n) of migration sources and destinations. In this embodiment, the listing information 122 indicates information indicative of a currently-connected virtual-machine-operating server 20 (20-i, where i = 1 to n) and a list of migration destination candidates (connection destination candidates) obtained by communications with the location optimization server (LO server) 30 via the communication section 13.

### [Configuration of Virtual-Machine-Operating Server]

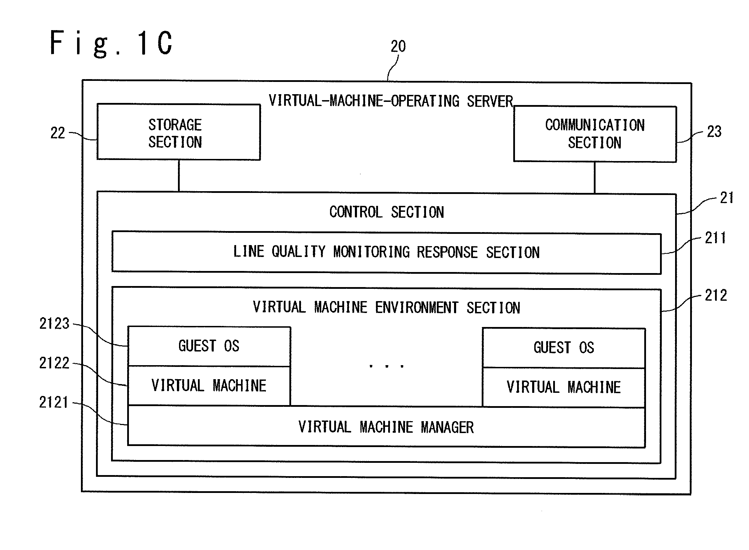

With reference to FIG. 1C, a description is given of an exemplary configuration of each virtual-machine-operating server 20 (20-i, where i = 1 to n).

Each of the virtual-machine-operating servers 20 (20-i, where i = 1 to n) includes a control section 21, a storage section 22 and a communication section 23.

The control section 21 performs an overall control of the internal structure of the virtual-machine-operating server 20.

The storage section 22 stores programs and various data.

The communication section 23 performs external communications via the network.

### [Details of Control Section of Virtual-Machine-Operating Server]

Next, a description is given of details of the control section 21 of each virtual-machine-operating server 20 (20-i, where i = 1 to n).

The control section 21 includes a line quality monitoring response section 211 and virtual machine environment section 212.

The line quality monitoring response section 211 responds to a line quality check request received from the line quality monitoring section 1112 of an agent 111. In this exemplary embodiment, the line quality monitoring response section 211 receives line quality monitoring packets from the line quality monitoring section 1112 of the agent 111 and returns response packets.

In the case when the above-described line quality monitoring section 1112 sends an "ICMP ping", the line quality monitoring response section 211 corresponds to an entity which has the function of responding to the "ICMP ping".

The virtual machine environment section 212 includes guest OSs (operating systems) 2121 (2121-j, where j = 1 to m, m being an arbitrary number), virtual machines 2122 (2122-j, where j = 1 to m), and a virtual machine manager 2123.

The guest OSs 2121 (2122-j, where j = 1 to m) are OSs established in the desktop environment of the thin client terminal 10.

Each virtual machine 2122 (2122-j, where j = 1 to m) boots and operates one guest OS 2121. Each virtual machine 2122 (2122-j, where j = 1 to m) thereby provides a desktop environment for a thin client terminal 10.

The virtual machine manager 2123 manages the virtual machines 2122. For example, the virtual machine manager 2123 manages generation, execution, migration (that is, transfer and transformation of programs and data), and discard of the virtual machines 2122 (2122-j, where j = 1 to m). The virtual machine manager 2123 is adapted to perform a migration of a virtual machine 2122 to another virtual- machine-operating server 20 (20-i, where i = 1 to n), when receiving a virtual machine migration command. Examples of the virtual machine manager 2123 may include a virtual machine monitor (VMM) such as a hypervisor.

### [Details of Storage Section of Virtual-Machine- Operating Server]

Next, a description is given of details of the storage section 22 of the virtual-machine-operating server 20 (20-i, where i = 1 to n).

The storage section 22 stores programs and various data necessary for realizing a conventional thin-client system. For example, the storage section 22 stores data related to authentication of the thin client terminals 10 (the agents 111), virtual machine software such as VMware (registered trademark), templates and configuration data of the virtual machines 2122 (2122-j, where j = 1 to m), and other data necessary for generating and operating the virtual machines.

### [Configuration of Location Optimization Server (LO server)]

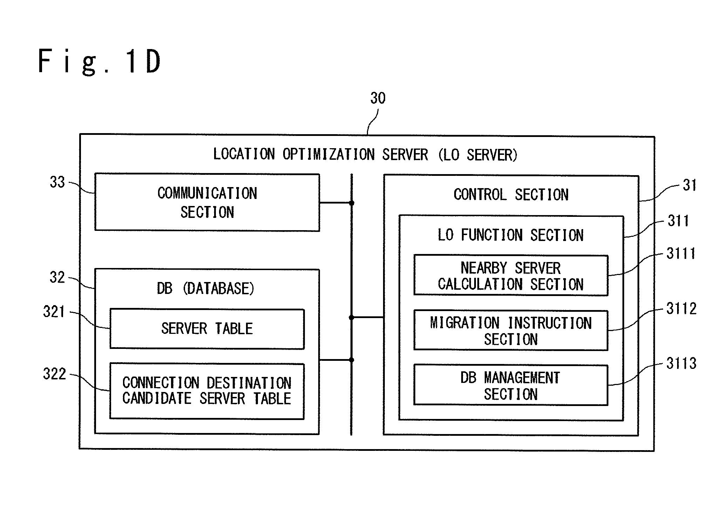

A description is given below of an exemplary configuration of the location optimization server (LO server) 30 with reference to FIG. 1D.

The location optimization server (LO server) 30 includes a control section 31, a DB (database) 32 and a communication section 33.

The control section 31 performs an overall control of the internal structure of the location optimization server (LO server) 30.

The DB 32 stores programs and various data. Note that it is not necessary that the DB 32 is provided within the location optimization server (LO server) 30; the DB 32 may be a server apparatus independent of the location optimization server (LO server) 30.

The communication section 33 performs external communications via the network.

### [Details of Control Section of Location Optimization Server (LO Server)]

Next, a description is given of details of the control section 31 of the location optimization server (LO server) 30.

The control section 31 includes an LO function section 311.

The LO function section 311 is realized by server software operating on the location optimization server (LO server) 30. The server software permanently reside on the location optimization server (LO server) 30. The server software may be an agent or a daemon. It should be noted that the LO function section 311 may be a dedicated device.

### [Details of LO Function Section]

Next, a description is given of details of the LO function section 311.

The LO function section 311 includes a nearby server calculation section 3111, a migration instruction section 3112 and a DB management section 3113.

The nearby server calculation section 3111 performs distance calculation using a specified algorithm. In this embodiment, the nearby server calculation section 3111 performs the distance calculation on the basis of location coordinates information transmitted from the agents 111 and the location coordinates information of a server table 321 stored in the DB 32. In this way, the nearby server calculation section 3111 can calculate the physical distance between a thin client terminal 10 installed with an agent 111 and each virtual- machine-operating server 20 (20-i, where i = 1 to n. The calculation method may be a method which calculates most simply the straight-line distance from the coordinates of the two points, or a method which calculates the ground distance from the latitudes and longitudes of the two points. In an actual implementation, the calculation method is not limited to these methods; an arbitrary algorithm may be used.

The migration section instruction section 3112 instructs the virtual-machine-operating servers 20 (20-i, where i = 1 to n) to perform migrations of virtual machines. In this embodiment, the migration section instruction section 3112 issues orders for migrations to the virtual-machine-operating servers 20 (20-i, where i = 1 to n) via the communication section 13.

The DB management section 3113 manages the DB 32. In this embodiment, the DB management section 3113 performs registration, update and deletion of data to and from the server table 321 and a connection destination candidate server table 322 which are stored in the DB 32, in accordance with instructions from the control section 31.

### [Details of DB of Location Optimization Server (LO server) ]

Next, a description is given of details of the DB 32 of the location optimization server (LO server) 30.

The DB 32 includes the server table 321 and the connection destination candidate server table 322.

The server table 321 is a table used for a unified management of network information and location coordinates information of the virtual-machine-operating servers 20 (20-i, where i = 1 to n) . The server table 321 stores sets of information of the virtual-machine-operating servers 20 (20-i, where i = 1 to n) (such as, server IDs, FQDNs and IP addresses) and corresponding location coordinates information.

The connection destination candidate server table 322 is a table composed of location coordinates information and listing information of candidates of connection destination servers. The connection destination candidate server table 322 stores location coordinates and information of virtual- machine-operating servers 20 (20-i, where i = 1 to n) which are to be determined as connection candidates on the basis of the location coordinates in each set.

### [Details of Server Table]

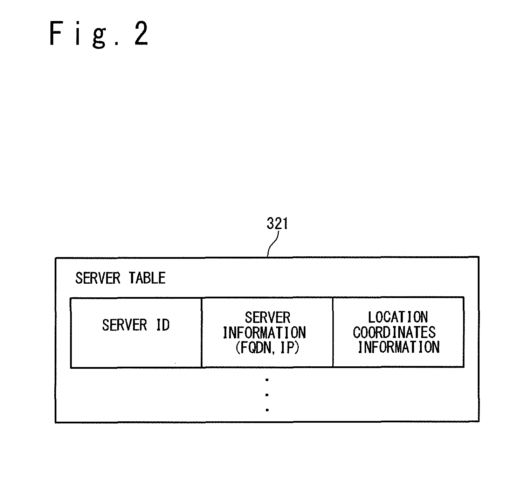

A description is given below of details of the server table 321 with reference to FIG. 2.

In this example, the server table 321 includes a "server ID" column, a "server information" column and a "location coordinates information" column.

The "server ID" column is a region (or field) for storing server IDs which are identifiers of the virtual-machine-operating servers 20 (20-i, where i = 1 to n) . The "server information" column is a region for storing network information of the servers, such as FQDNs and IP addresses. The "location coordinates information" column is a region for storing location coordinates information of the servers, such as the latitudes and longitudes.

The DB management section 3113 registers available information of the virtual-machine-operating servers 20 (20-i, where i = 1 to n) into the server table 321 preliminarily (or in advance), from the start of the operation of the system of the present invention.

Also, when any information of the virtual-machine-operating servers 20 (20-i, where i = 1 to n) registered in the server table 321 is to be modified, the DB management section 3113 updates or deletes the information.

### [Details of Connection Destination Candidate Server Table]

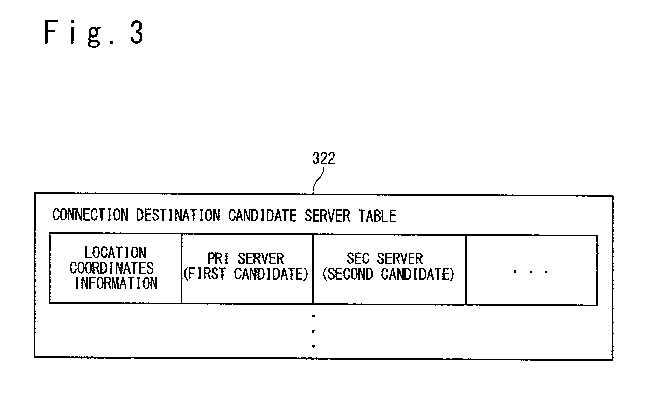

FIG. 3 shows one example of the connection destination candidate server table 322.

In this example, the connection destination candidate server table 322 includes a "location coordinates information" column, a "PRI (primary) server" column and a "SEC (second) server" column.

The "location coordinates information" column is a region for storing location coordinates information transmitted from the thin client terminals 10 (the agents 111). The "PRI server" column and the "SEC server" column are regions for storing listing information of candidates of connection destination servers. In this embodiment, the "PRI server" column is a region for storing information of the first candidate of the connection destination server, and the "SEC server" column is a region for storing information of the second candidate of the connection destination server.

When receiving an inquiry for a list of nearby servers from a location coordinate recognition section 1111 under the control of an agent 111, the nearby server calculation section 3111 calculates the physical distance between the thin client terminal 10 installed with the agent 111 and each virtual-machine- operating server 20 (20-i, where i = 1 to n) registered in the server table 321.

The DB management section 3113 registers servers into the connection destination candidate server table 322 in the order in which the calculated distances are small in such a manner that the nearest server is determined as the "PRI server" (the first candidate) and the second nearest server is determined as the "SEC server" (the second candidate); the similar applies to other servers.

Also, the DB management section 3113 updates data of the connection destination candidate server table 322 when a migration is ordered in response to the line quality monitoring of the line quality monitoring section 1112 under the control of the agent 111.

### [Data Update Method of Connection Destination Candidate Server Table]

A method of updating data of the connection destination candidate server table 322 may be a method described in the following:

When an order for a migration to server A which is the virtual-machine-operating server 20 (20-i, where i = 1 to n) with the highest line quality is issued from the migration instruction section 1113 of the agent 111, for example, server A is simply moved to the "PRI server" column of the connection destination candidate server table 322, to place the highest priority on server A. Note that an actual implementation is not limited to this method; an arbitrary algorithm may be used.

### [Examples of Hardware]

In the following, a description is given of specific hardware examples for realizing the virtual machine management system according to the present invention.

Assumed examples of the thin client terminals 10, the virtual-machine-operating servers 20 (20-i, where i = 1 to n) and the location optimization server (LO server) 30 may include computers such as PCs (personal computers), appliances, workstations, main frames and super computers.

Other examples of the thin client terminals 10 may include cellular phones, smart phones, smart books, car navigation systems, portable game consoles, home game consoles, portable music players, handy terminals, gadgets (electronic devices), interactive televisions, digital tuners, digital recorders, information home appliances, OA (office automation) equipment, storefront terminals and high-end copy machines. The thin client terminals 10 may be mounted on movable bodies, such as vehicles, ships and airplanes.

Other examples of the virtual-machine-operating servers 20 (20-i, where i=1 to n) may include intermediary devices, such as network switches, routers, proxies, gateways, base stations and access points, and middle boxes, such as, firewalls, load balancers, bandwidth control apparatuses, security monitor and control apparatuses.

Examples of the control sections 11, 21 and 31 may include CPUs (central processing unit), network processors (NPs), microprocessors, microcontrollers and large scale integrated circuits (LSI) having the dedicated function.

The internal structure of each control section 11, 21 and 31 may include modules, components, dedicated devices and booting (calling) programs thereof.

Examples of the storage sections 12 and 22 and the DB 32 may include semiconductor memory devices such as RAMs (random access memories), ROMs (read only memories), EEPROMs (electrically erasable programmable read only memories) and flash memories, auxiliary memory units such as HDDs (hard disk drives) and SSD (solid state drives), removable disks such as DVDs (digital versatile disks), and recording media such as SD (secure digital) memory cards. Buffers or registers may be used instead.

The DB 32 may be a storage device provided in a peripheral device (such as external HDDs) and an external server (such as a web server and a file server) or a storage device using a DAS (direct attached storage), an FC-SAN (fiber channel-storage area network), an NAS (network attached storage), and an IP-SAN (IP-storage area network).

Examples of the communication sections 13, 23 and 33 may include circuit boards adapted to network communications (such as mother boards and I/O boards), semiconductor integrated circuits such as chips, network adapters such as NICs (network interface cards), similar expansion cards, communication apparatuses such as antennas, and communication ports such as connectors.

Also, examples of the network may include the Internet, an LAN (local area network) , a wireless LAN, and a WAN (wide area network), a backbone, a cable television (CATV) line, a public switched telephone network, a cellular phone network, WiMAX (IEEE 802.16a), 3G (3^{rd} generation), a lease line, IrDA (infrared data association), Bluetooth (registered trademark), a serial communication line and a data bus.

It should be noted that an actual implementation is not limited to these examples.

### [Implementation Examples]

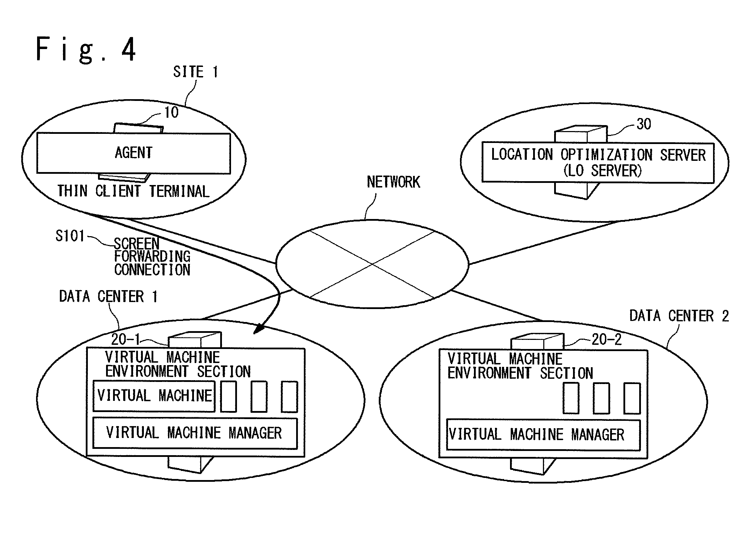

With reference to FIGs. 4 to 8, a description is given of implementation examples of the present invention.

In this example, virtual-machine-operating servers 20-1 and 20-2 are focused as examples of the virtual-machine-operating servers 20 (20-i, where i = 1 to n). The virtual-machine-operating server 20-1 is provided in data center 1, and the virtual-machine-operating server 20-2 is provided in data center 2. Data centers 1 and 2 are located at different locations. Let us assume that a thin client terminal 10 is initially located at site 1 (the first installation location).

### (1) Step S101

As shown in FIG. 4, the thin client terminal 10 establishes a remote screen forwarding connection to a virtual machine 2122 (2122-j, where j = 1 to m) of the virtual-machine-operating server 20-1 in data center 1 (which is specified by the default settings), in response to a user operation.

### (2) Step S102

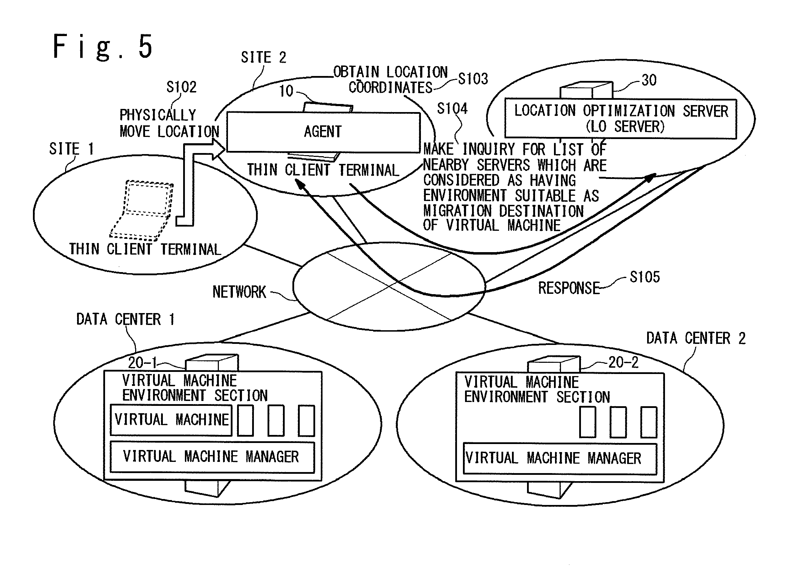

Thereafter, as shown in FIG. 5, the thin client terminal 10 physically moves its location to a remote place, for example, due to a business trip of the user (Step S102 in FIG. 5) . In this example, the thin client terminal 10 moves from site 1 (the first installation location) to site 2 (the second installation location). Sites 1 and 2 are located at different locations.

### (3) Step S103

After physically moving its location, the thin client terminal 10 obtains the location coordinates of its location under the control of the agent 111. In other words, the thin client terminal 10 obtains the location coordinates of the current location at the movement destination, after moving its location.

### (4) Step S104

The thin client terminal 10 makes an inquiry to the location optimization server (LO server 30) under the control of the agent 111 for the listing information of nearby virtual-machine-operating servers 20 (20-i, i = 1 to n) (which are physically located nearby), which can be considered as having an environment suitable as the migration destination of the virtual machine (Step S104 in FIG. 5).

### (5) Step S105

The location optimization server (LO server 30) returns listing information of such virtual-machine-operating servers 20 (20-i, where i = 1 to n) as a response to the inquiry (Step S105 in FIG. 5).

### (6) Step S106

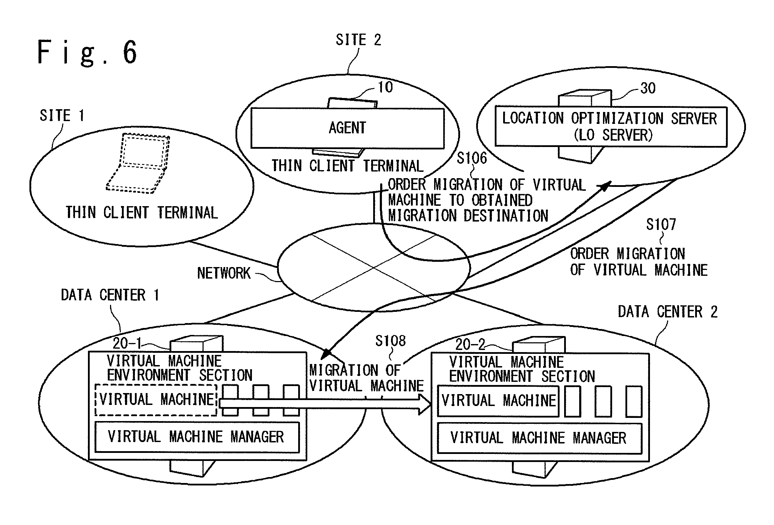

As shown in FIG. 6, the thin client terminal 10 issues to the location optimization server (LO server) 30 an order for a migration of the virtual machine under the control of the agent 111 (Step S106 in FIG. 6) . In this operation, the thin client terminal 10 specifies the most appropriate virtual-machine-operating server by referring the listing information of the virtual-machine- operating servers 20 (20-i, where i = 1 to n) and issues to the location optimization server (LO server) 30 an order for a migration of the virtual machine to the specified virtual-machine-operating server.

### (7) Step S107

The location optimization server (LO server) 30 issues to the virtual-machine-operating server 20 (20-i, where i = 1 to n) an order of the migration of the virtual machine (Step S107 in FIG. 6).

### (8) Step S108

The virtual-machine-operating server 20 (20-i, where i = 1 to n) performs the migration (that is, transfer and transportation of programs and data) of the virtual machine (Step S108 in FIG. 6).

### (9) Step S109

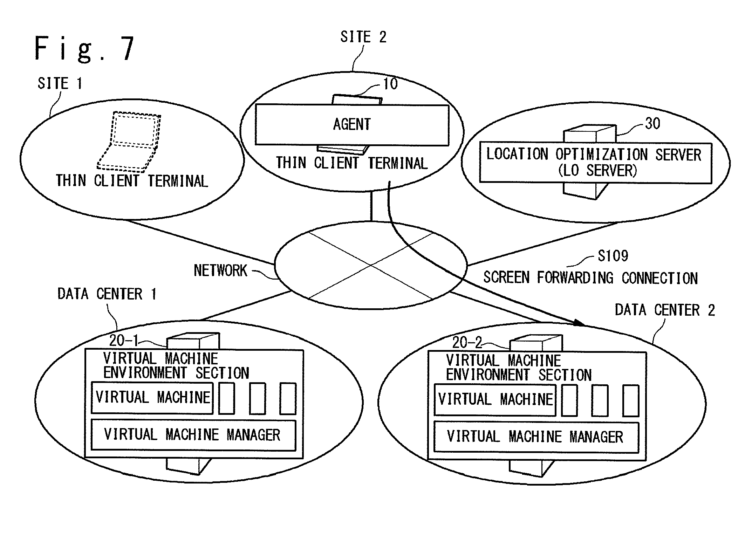

As shown in FIG. 7, the thin client terminal 10 establishes a screen forwarding connection with the virtual machine operating on the migration destination (Step S109 in FIG. 7).

### (10) Step S110

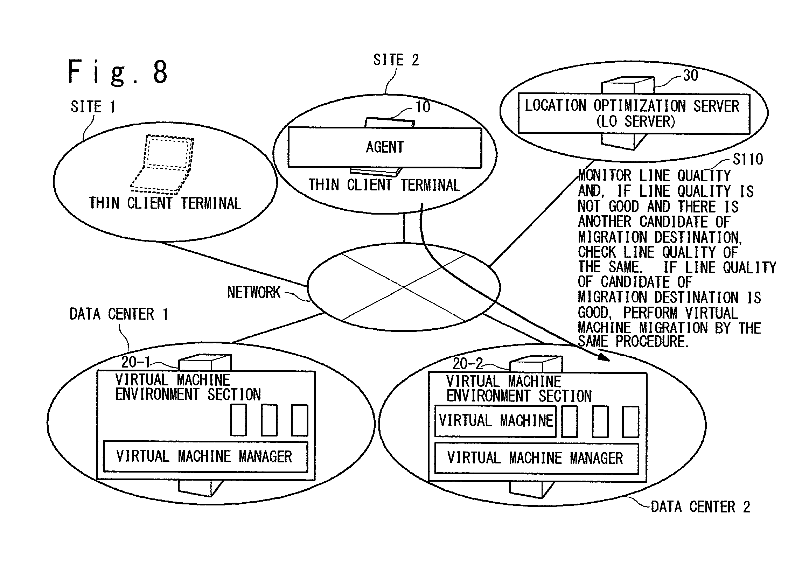

As shown in FIG. 8, the thin client terminal 10 performs line quality monitoring under the control of the agent 111; when a comfortable desktop environment cannot be provided due to the low line quality, the thin client terminal 10 makes a search for another migration destination candidate and, if another migration destination candidate is found, performs a line quality check for the candidate found (Step S110 in FIG. 8).

In the case that candidate A is found as another migration destination candidate, for example, when the quality check for candidate A proves that the line quality of the connection with candidate A is good, the thin client terminal 10 achieves a migration of the virtual machine to candidate A by instructing the location optimization server (LO server) 30.

This allows operating the virtual machine on a virtual-machine-operating server 20 (20-i, where i = 1 to n) connected via a line with a reduced delay and high quality, providing a comfortable desktop environment.

### [Virtual Machine Management Processing]

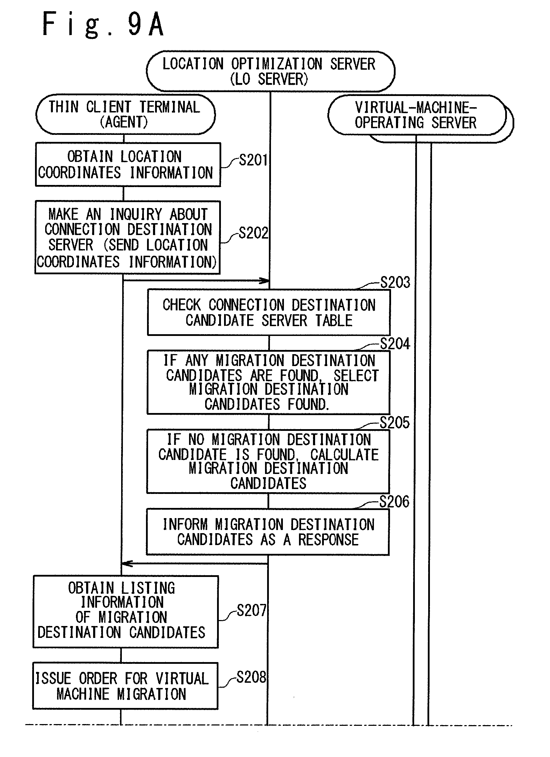

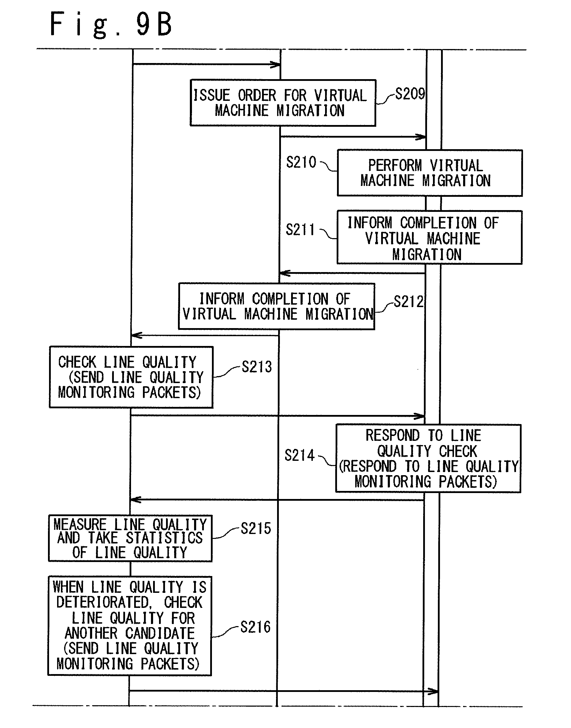

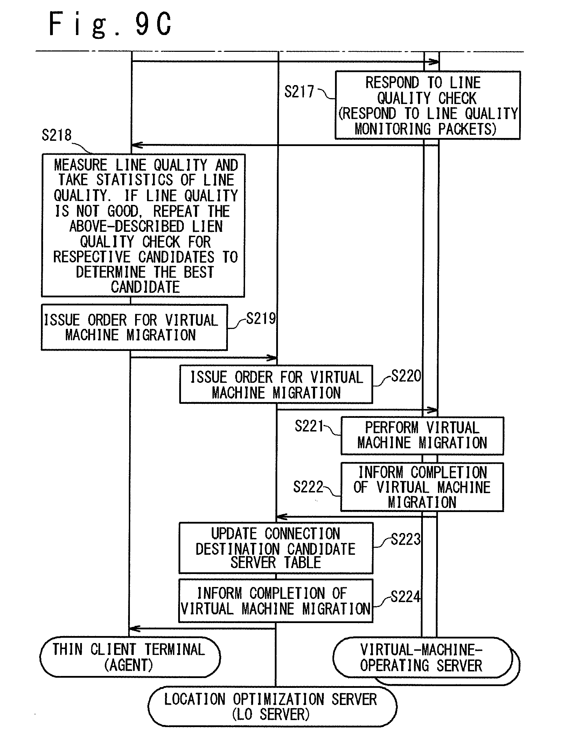

Next, a description is given of the operation of the virtual machine management system (virtual machine management processing) according to the present exemplary embodiment with reference to the sequence diagram shown in FIGs. 9A, 9B and 9C.

### (1) Step S201

The user establishes a remote screen forwarding connection with a virtual machine of data center 1 (which is selected by the default configuration) from the thin client terminal 10. The thin client terminal 10 then physically moves its location to a remote place, for example, in a user's business trip. After physically moving its place, the thin client terminal 10 functions as the location coordinates recognition section 1111 to obtain location coordinates information.

### (2) Step S202

The control section 11 of the thin client terminal 10 makes an inquiry to the location optimization server (LO server 30) under the control of the agent 111 for the listing information of nearby virtual-machine-operating servers 20 (20-i, i = 1 to n) (which are physically located nearby), which can be considered as having an environment suitable as the migration destination of the virtual machine, via the communication section 13. In this operation, the control section 11 sends the location coordinates information of the thin client terminal 10 to the location optimization server (LO server) 30.

### (3) Step S203

The control section 31 of the location optimization server (LO server) 30 receives the location coordinates information transmitted from the thin client terminal 10 (the agent 111) via the communication section 33, and checks whether data including the location coordinates information as a key exists in the connection destination candidate server table 322.

### (4) Step S204

If there are such data, the control section 31 of the location optimization server (LO server) 30 decides that there already exists a thin client terminal 10 (or an agent 111) which has establishes a connection from the coordinates, and returns data of the migration destination candidates to the thin client terminal 10 (the agent 111) as a response. The data of the migration destination candidates may be listing information of the migration destination candidates.

### (5) Step S205

If there are not such data, the control section 31 of the location optimization server (LO server) 30 functions as the nearby server calculation section 3111 to calculate the distance to each virtual-machine-operating server 20 (20-i, where i = 1 to n) on the basis of the received location coordinates information and the data of the server table 321. The control section 31 generates data of the migration destination candidates as a calculation result, registers the data of the migration destination candidates into the DB 32, functioning as the DB management section 3113, and determines the data of the migration destination candidates as a response to be sent to the thin client terminal 10 (the agent 111).

### (6) Step S206

The control section 31 of the location optimization server (LO server) 30 transmits the data of the migration destination candidates to the thin client terminal 10 (the agent 111) via the communication section 33 as a response to the thin client terminal 10 (the agent 111).

### (7) Step S207

The control section 11 of the thin client terminal 10 stores listing information indicative of the migration destination candidates (listing information 122) into the storage section 12 on the basis of the transmitted data of the migration destination candidates. If there are one or more migration destination candidates, the control section 11 goes onto the next process (step S208) ; if there are not, the control section 11 maintains the current remote screen forwarding connection.

### (8) Step S208

The control section 111 of the thin client terminal 10 functions as the migration instruction section 1113 to issue to the location optimization server (LO server) 30 an order for a migration of the virtual machine.

### (9) Step S209

The control section 31 of the location optimization server (LO server) 30 functions as the migration instruction section 3112 to issue to the virtual-machine-operating server 20 (20-i, where i = 1 to n) an order for the migration of the virtual machine.

### (10) Step S210

The control section 21 of the virtual-machine-operating server 20 (20-i, where i = 1 to n) functions as the virtual machine manager 2123, and performs the migration of the virtual machine in response to the order for the virtual machine migration received from the location optimization server (LO server) 30.

### (11) Step S211

The control section 21 of the virtual-machine-operating server 20 (20-i, where i = 1 to n) notifies the location optimization server (LO server) 30 of the completion of the migration of the virtual machine.

### (12) Step S212

The location optimization server (LO server) 30 notifies the thin client terminal 10 (the agent 111) of the completion of the migration of the virtual machine.

### (13) Step S213

When the screen forwarding connection is cut off due to the migration in the form of timeout and the like, the user establishes a screen forwarding connection to the virtual machine operating on the migration destination from the thin client terminal 10. The control section 11 of the thin client terminal 10 functions as the line quality monitoring section 1112 and transmits line quality monitoring packets to the virtual-machine-operating server 20 (20-i, where i = 1 to n) via the communication section 13 as a response to check the line quality.

### (14) Step S214

The control section 21 of the virtual-machine-operating server 20 (20-i, where i = 1 to n) functions as the line quality monitoring response section 211 and returns responses via the communication section 23 to the line quality monitoring packets received from the thin client terminal 10.

### (15) Step S215

The control section 11 of the thin client terminal 10 functions as the line quality monitoring section 1112 to measure and take statistics of the line quality (the line delay and the line bandwidth) upon reception of the responses from the virtual-machine-operating server 20 (20-i, where i = 1 to n) via the communication section 13. When the line quality becomes lower than a threshold specified in advance so that a comfortable desktop environment cannot be provided, the procedure goes onto the next process (step S217).

### (16) Step S216

When there exists another migration destination candidate, candidate A, in the listing information 122 stored in the storage section 12, the control section 11 of the thin client terminal 10 functions as the line quality monitoring section 1112 and transmits line quality monitoring packets to candidate A via the communication section 13 to check the line quality. Note that candidate A is also one of the virtual-machine- operating servers 20 (20-i, where i = 1 to n).

### (17) Step S217

The control section 21 of candidate A functions as the line quality monitoring response section 211 and returns responses via the communication section 23 to the line quality monitoring packets received from the thin client terminal 10.

### (18) Step S218

The control section 11 of the thin client terminal 10 functions as the line quality monitoring section 1112 and measures and takes statistics of the line quality (the line delay and the line bandwidth) upon reception of the response from the line quality monitoring response section 211 of candidate A via the communication section 13. If the line quality with respect to candidate A is determined as good as a result of the line quality check, the procedure goes onto the next process (step S219). If the line quality with respect to candidate A is not good, the line quality check is further repeated for other migration destination candidates specified by the listing information 122 stored in the storage section 12 to find a connection destination with the highest line quality.

### (19) Step S219

The control section 11 of the thin client terminal 10 functions as the migration instruction section 1113 and issues to the location optimization server (LO server) 30 an order for a migration of the virtual machine to candidate A.

### (20) Step S220

The control section 31 of the location optimization server (LO server) 30 functions as the migration instruction section 3112 and issues to the virtual-machine-operating server 20 (20-i, where i = 1 to n) an order for the migration of the virtual machine to candidate A.

### (21) Step S221

The control section 21 of the virtual-machine-operating server 20 (20-i, where i = 1 to n) functions as the virtual machine manager 2123 and performs the migration of the virtual machine to candidate A.

### (22) Step S222

The control section 21 of the virtual-machine-operating server 20 (20-i, where i = 1 to n) notifies the location optimization server (LO server) 30 of the completion of the migration of the virtual machine.

### (23) Step S223

The control section 31 of the location optimization server (LO server) 30 functions as the DB management section 3113 and updates the order of the migration destination candidates in the connection destination candidate table 322 on the basis of the notification of the completion of the virtual machine migration received from the virtual-machine- operating server 20 (20-i, where i = 1 to n).

### (24) Step S224

The location optimization server (LO server) 30 notifies the thin client terminal 10 (the agent 111) of the completion of the virtual machine migration.

When the screen forwarding connection is cut off due to the migration in the form of timeout and the like, the user establishes a screen forwarding connection to the virtual machine operating on the migration destination from the thin client terminal 10.

### [Supplement]

It should be noted that, in an actual operation, the operations of steps S207 and S208 may be performed by the control section 31 of the location optimization server (LO server) 30 in place of the control section 11 of the thin client terminal 10. In other words, the control section 31 of the location optimization server (LO server) 30 may perform the operations from the inquiry for the connection destination servers at step S202 to the notification of the completion of the virtual machine migration at step S212 as one series of operations. In this case, the control section 31 of the location optimization server (LO server) 30 specifies the virtual- machine-operating server of the migration destination on the basis of the location coordinates information of the thin client terminal 10.

Also, the operations of steps S213, S215, S216, S218 and S219 may be performed by the control section 31 of the location optimization server (LO server) 30 in place of the control section 11 of the thin client terminal 10. In this case, the control section 31 of the location optimization server LO server) 30 may perform line quality checks for both of the thin client terminal 10 and the virtual-machine-operating server 20 (20-i, where i = 1 to n) .

### [Modification Example]

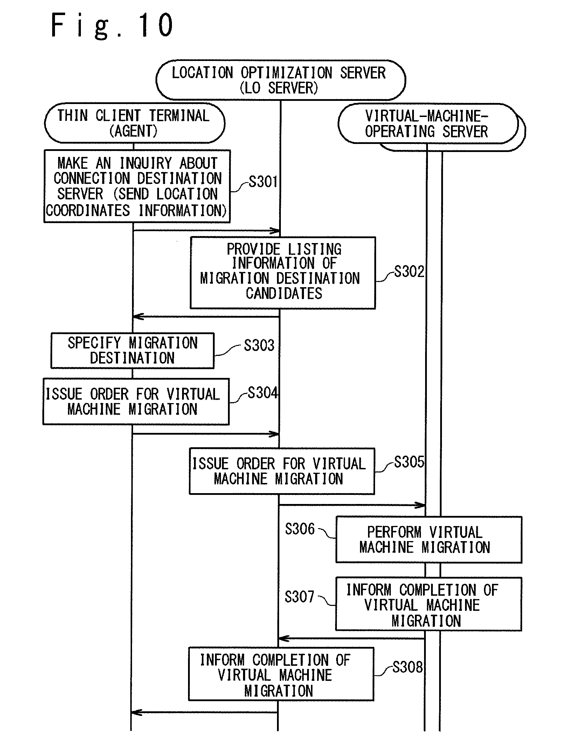

A description is given below of a modification example of the present invention with reference to FIG. 10.

Although the description of the implementation example of the present exemplary embodiment recites that the location coordinates information is obtained after the movement of the thin client terminal 10, the migration may be completed in advance before the movement by performing the following procedure, when the destination of the movement is already known, for example, in the case of a "business trip".

### (1) Step S301

The control section 11 of the thin client terminal 10 makes an inquiry to the location optimization server (LO server 30) under the control of the agent 111 for listing information of virtual-machine-operating servers 20 (20-i, i = 1 to n) via the communication section 13. In this operation, the control section 11 of the thin client terminal 10 may limit the range (the area of the destination of the business trip and the like) to some extent, and make an inquiry for the listing information of the virtual-machine-operating servers 20 (20-i, i = 1 to n) which are located in the limited range. Instead, the control section 11 of the thin client terminal 10 may notify the location optimization server (LO server) 30 of the location coordinates information of the destination of the business trip, and make an inquiry for listing information of the virtual- machine-operating servers 20 (20-i, i = 1 to n) which are located near the location coordinates.

### (2) Step S302

The control section 31 of the location optimization server (LO server) 30 transmits the listing information of such virtual- machine-operating servers 20 to the thin client terminal 10 (the agent 111) as a response to the inquiry.

### (3) Step S303

The user refers to the listing information and selects a server near the destination of the business trip (which is considered as providing a good desktop connection environment). In this operation, the thin client terminal 10 may automatically select a server near the destination of the business trip under the control of the agent 111 on the basis of information related to the destination of the user's business trip and the listing information. In this way, the control section 11 of the thin client terminal 10 specifies a server near the destination of the business trip (which is considered as providing a good desktop connection environment).

### (4) Step S304

The control section 11 of the thin client terminal 10 instructs the location optimization server (LO server) 30 to perform a migration to the server near the destination of the business trip (which is considered as providing a good desktop connection environment) under the control of the agent 111.

The server near the destination of the business trip (which is considered as providing a good desktop connection environment) may be selected by the user or automatically selected by the thin client terminal 10 (or the agent 111) . In this operation, the control section 11 of the thin client terminal 10 may specify the date and hour when the migration is to be performed (for example, the date and hour immediately before the estimated time of arrival to the destination of the business trip) and instruct the location optimization server (LO server) 30 to perform the migration on the date and hour specified.

### (5) Step S305

The control section 31 of the location optimization server (LO server) 30 instructs the virtual-machine-operating server 20 (20-i, where i = 1 to n) to perform a migration to the server near the destination of the business trip (which is considered as providing a good desktop connection environment). In this operation, the control section 31 of the location optimization server (LO server 30) may instruct to perform the migration to the server near the destination of the business trip (which is considered as providing a good desktop connection environment) on the date and hour specified by the thin client terminal 10.

### (6) Step S306

The control section 21 of the virtual-machine-operating server 20 (20-i, where i = 1 to n) functions as the virtual machine manager 2123, and performs the migration of the virtual machine in response to the order for the virtual machine migration of the location optimization server (LO server) 30.

### (7) Step S307

The control section 21 of the virtual-machine-operating server 20 (20-i, where i = 1 to n) notifies the location optimization server (LO server) 30 of the completion of the migration of the virtual machine.

### (8) Step S308

The location optimization server (LO server) 30 notifies the thin client terminal 10 (the agent 111) of the completion of the migration of the virtual machine.

The processes to be performed subsequently are similar to the processes performed at step S213 and the following steps shown in FIG. 9B.

The above-described procedure allows establishing a screen forwarding connection at the movement destination, since the migration is completed before the movement.

### [Advantageous Effect of the Present Exemplary Embodiment]

The system of this exemplary embodiment, which is configured to perform a migration of a virtual machine to the nearest virtual-machine-operating server derived from the location coordinates information of the client terminal, allows establishing a connection with a virtual-machine- operating server with a reduced line delay.

Also, the system of this exemplary embodiment, which is configured to perform the migration of the virtual machine to the virtual-machine-server with a better environment through line quality monitoring, allows maintaining the desktop environment against the deterioration of the line quality.

### <Second Embodiment>

A description is given below of a second embodiment of the present invention.

The present invention is applicable to not only virtual-machine-operating servers but also a VTN (virtual tenant network).

The VTN is a virtual network established on a controller such as OFCs (OpenFlow controllers) in OpenFlow in units of tenants.

Details of OpenFlow are described in non-patent literature 1.

A user traffic transmission can be achieved over a physical network by mapping a VTN established on a controller to the physical network.

### [System Configuration]

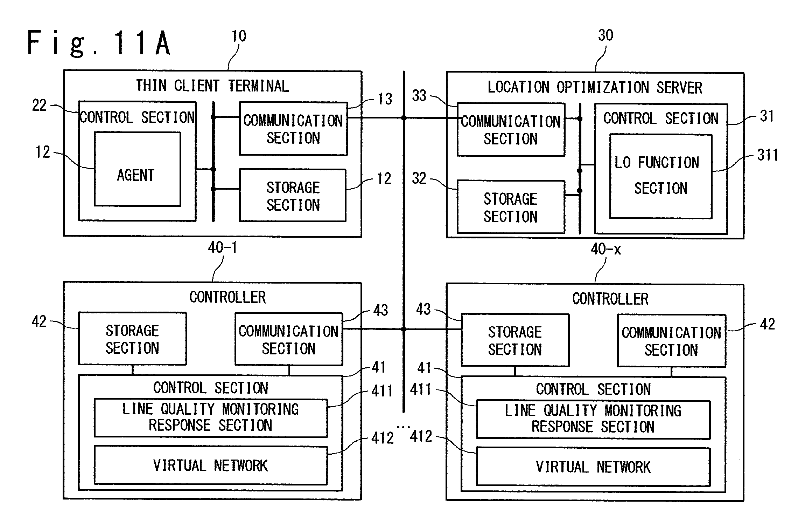

A description is given of an exemplary configuration of a virtual machine management system according to a second exemplary embodiment of the present invention with reference to FIG. 11A.

The virtual machine management system according to the second exemplary embodiment of the present invention includes thin client terminals 10, a location optimization server (LO server) and controllers 40 (40-k, where k = 1 to x, x being an arbitrary number).

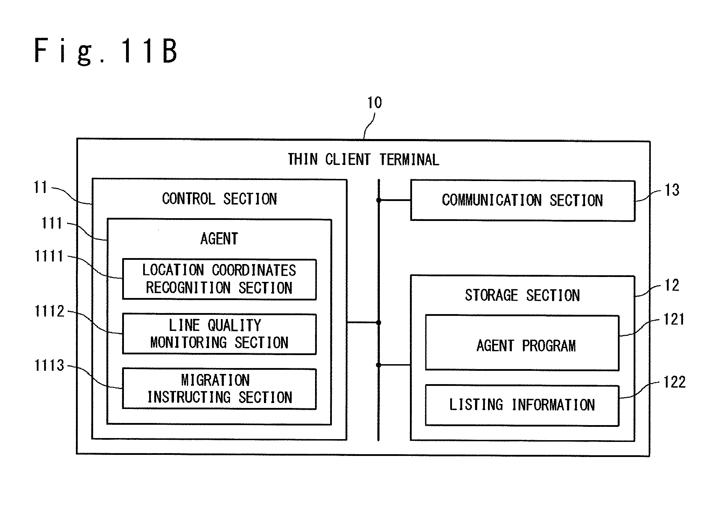

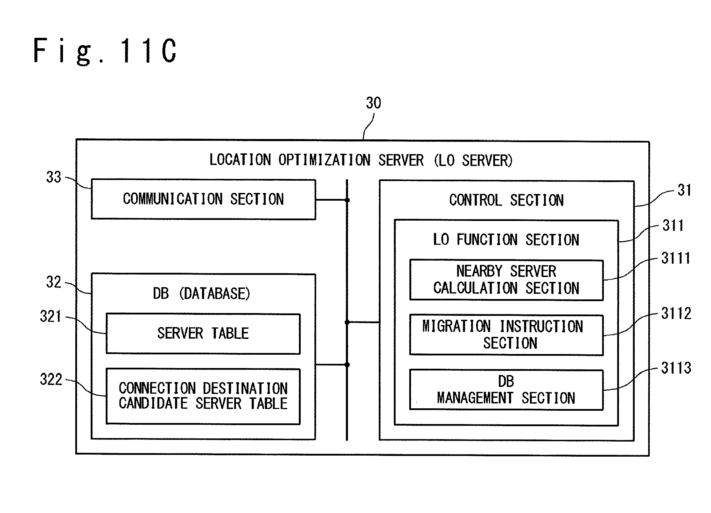

As shown in FIGs. 11B and 11C, the thin client terminals 10 and the location optimization server (LO server) 30 are basically unchanged from the first exemplary embodiment.

The thin client terminals 10, the location optimization server (LO server) 30 and the controllers 40 (40-k, where k = 1 to x) are connected via a network. Each of the thin client terminals 10, the location optimization server (LO server) 30 and the controllers 40 (40-k, where k = 1 to x) is a physical node existing on the physical network.

Although not shown, each of the controllers 40 (40-k, where k = 1 to x) is connected to switches to be managed thereby, such as OFSs (OpenFlow switches), via secure channels. The switches form a physical network. It should be noted that the switches may be virtual switches realized by virtual machines operating on physical machines.

Each of the controllers 40 (40-k, where k = 1 to x) is based on the VTN to control the behaviors of the switches by operating the flow tables of the switches. Possible examples of the controllers 40 (40-k, where k = 1 to x) may include computers such as personal computers.

The flow table is a table into which flow entries are registered, each of which defines a predetermined operation (or action) to be performed on packets (communication data) matching a predetermined condition (or a rule).

A group of packets (a sequence of packets) matching a rule defined in a flow entry are referred to as flow.

The rules of the flow entries are allowed to be defined by various combinations using any or all of the destination address, the source address, the destination and source ports which are included in the header regions of the respective protocol layers of packets; the rules of the flow entries are distinguishable from each other. Note that the above-described addresses mean to include the MAC (media access control) address and the IP (Internet protocol) address. Also, information of the ingress port may be used as a rule of a flow entry in addition to the items listed above. A representation which represents some or all of the values of the header regions of packets indicating the flow by using a regular expression, a wildcard "*" or the like may be set as a rule of a flow entry.

Examples of the action of a flow entry may include "outputting to a specific port", "discard", and "rewriting the header".

A switch performs the action of a flow entry on packets (or a flow) which match the rule defined in the flow entry.

### [Configuration of Controller]

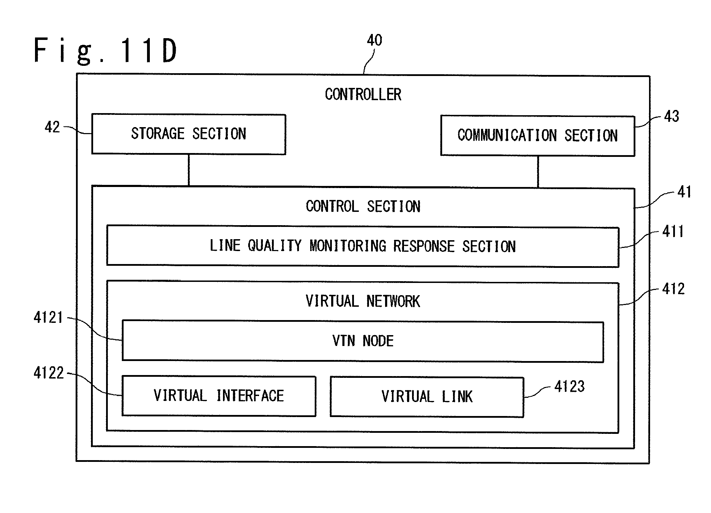

A description is given below of an exemplary configuration of the controllers 40 (40-i, where i = 1 to n) with reference to FIG. 11D.

Each controller 40 (40-i, where i = 1 to n) includes a control section 41, a storage section 42 and a communication section 43.

The control section 41 performs an overall control of the internal structure of the controller 10.

The storage section 42 stores programs and various data used in OpenFlow and a VTN.

The communication section 43 performs external communications via the network.

### [Details of Control Section of Controller]

Next, a description is given of details of the control section 41 of the controller 40 (40-i, where i = 1 to n).

The control section 41 includes a line quality monitoring response section 411 and a VTN 412.

The line quality monitoring response section 411 responds to a line quality check request from the line quality monitoring section 1112 of the agent 111. In this exemplary embodiment, the line quality monitoring response section 411 receives line quality monitoring packets from the line quality monitoring section 1112 of the agent 111, and returns response packets. In other words, the line quality monitoring response section 411 basically operates in the same way as the line quality monitoring response section 211 in the first embodiment.

The VTN 412 is a virtual network established on the controller 40 which operates in units of tenants.

### [Details of VTN]

Next, a description is given of details of the VTN.

The VTN 412 includes VTN nodes 4121, virtual interfaces 4122 and virtual links 4123.

The VTN nodes 4121 are nodes existing over the virtual network. Examples of the VTN nodes 4121 may include virtual switches (virtual SWs) such as virtual L2 switches and virtual L3 switches, virtual external networks, virtual servers, virtual firewalls (virtual FWs) and virtual load balancers (virtual LBs).

The virtual interfaces 4122 correspond to communication interfaces in the virtual nodes 4121. Examples of the virtual interfaces 4122 may include virtual ports.

The virtual links 4123 are links which provide connections among the virtual interfaces 4122.

The VTN 412 is established by connecting the virtual interfaces 4122 of the VTN nodes 4121 with the virtual links 4123.

### [Implementation Example]

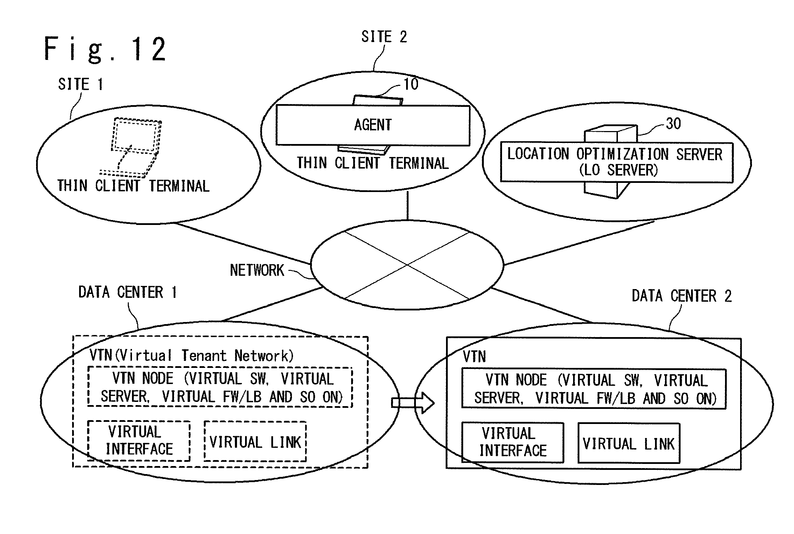

As shown in FIG. 12, in this exemplary embodiment, when a thin client terminal movers its location, a comfortable remote connection from a terminal to an element (such as a switch) forming a virtual network can be achieved by performing a migration of the virtual network established as a VTN to a nearer data center.

### [Supplement]

It should be noted that, in an actual implementation, a VTN 412 may be realized by a virtual machine 2122 (2122-j, where j = 1 to m) shown in FIG. 1. For example, a virtual machine 2122 (2122-j, where j = 1 to m) operates software related to the VTN 412 in place of a guest OS 2121 (2121-j, where j = 1 to m). In other words, a controller 40 (40-i, where i = 1 to n) may be a virtual-machine-operating server 20 (20-i, where i = 1 to n).

### <Relationship among Respective Embodiments>

It should be noted that the above-described respective embodiments may be combined in implementation.

### <Summary>

As described above, in the present invention, a location optimization server on the network manages virtual-machine-operating servers on which virtual machines providing services for client terminals operate, and orders migrations of the virtual machines to destination virtual-machine-operating servers selected depending on location coordinates information of the client terminals. In this operation, the location optimization server issues instructions related to the migrations of the virtual machines to both of migration source virtual-machine-operating servers on which the virtual machine are currently operating and migration destination virtual-machine-operating servers.

In the present invention, an optimum migration destination virtual-machine-operating server is determined depending on location coordinates information of a client terminal in performing a virtual machine migration; this allows providing a stable desktop environment.

Also, the line quality is monitored and, when the line quality is deteriorated, another optimum migration destination virtual-machine-operating server is determined and switching is performed to the same; this suppresses destabilization of the desktop environment.

The present invention allows establishing a connection to a virtual-machine-operating server subjected to a reduced influence of the line delay, since a migration of a virtual machine is performed to the nearest virtual-machine-operating server determined from the location coordinates information of the client terminal.

Also, the present invention allows maintaining the desktop environment against a deterioration of the line quality, since a migration of a virtual machine is performed to a virtual-machine-operating server having a better environment through the line quality monitoring.

### <Supplementary Note>

Some or all of the above-described exemplary embodiments may be described as supplementary nodes given in the following. Note that an actual implementation is not limited to examples described in the following.

### (Supplementary Note 1)

A virtual machine management system, including:
a client terminal;
virtual-machine-operating servers on which a virtual machine providing a service for the client terminal operates; and
a location optimization server which orders a migration of the virtual machine to a destination virtual-machine-operating server selected depending on location coordinates information related to the client terminal.

### (Supplementary Note 2)

The virtual machine management system set forth in supplementary note 1, wherein the client terminal includes:
a device configured to obtain location coordinates information thereof and to make an inquiry to the location optimization server for the destination virtual-machine-operating server, on the basis of the location coordinates information;
a device configured to receive listing information indicative of candidates of the destination virtual-machine-operating server from the location optimization server; and
a device configured to specify the destination virtual-machine-operating server based on the listing information and to make a request to the location optimization server for a migration of the virtual machine to the specified destination virtual-machine-operating server.

### (Supplementary Note 3)

The virtual machine management system set forth in supplementary note 2,
wherein the location optimization server includes:
a device configured to, when receiving the inquiry for the destination virtual-machine-operating server from the client terminal, refer to management information of the virtual machine operating servers and to check whether destination candidates exist in the management information, based on the location coordinates information related to the client terminal,
a device configured to, when any destination candidates are found in the management information, define the listing information as information of the destination candidates;
a device configured to, when no destination candidates are found in the management information, calculate destination candidates based on the location coordinate information related to the client terminal and to define the listing information as information of the calculated destination candidates;
a device configured to order a migration of the virtual machine to the destination virtual-machine-operating server specified based on the listing information;
a device configured to receive a migration completion notification of the virtual machine from the specified virtual-machine-operating server;
a device configured to update the management information of the virtual-machine-operating servers in response to the migration completion notification of the virtual machine; and
a device configured to transmit a migration completion notification of the virtual machine to the client terminal.

### (Supplementary Note 4)

The virtual machine management system set forth in supplementary note 3, wherein the location optimization server further includes:
a device configured to, before a movement of the client terminal, obtain location coordinates information of a movement destination of the client terminal in advance; and
a device configured to order a migration of the virtual machine to a virtual-machine-operating server selected depending on the location coordinates information of the movement destination.

### (Supplementary Note 5)

The virtual machine management system set forth in any one of supplementary notes 1 to 4, wherein at least one of the client terminal and the location optimization server is configured to transmit line quality monitoring packets to candidates of the destination virtual-machine-operating server, to receive responses, to measure and take statistics of a line quality based on the responses, to specify the destination virtual-machine-operating server as results of the measurement and the statistics of the line quality, and to issue an order for a migration of the virtual machine to the specified virtual-machine-operating server.

### (Supplementary Note 6)

The virtual machine management system set forth in any one of supplementary notes 1 to 5, wherein the virtual-machine-operating server includes an OpenFlow controller, and
wherein the virtual machine provides a service related to a VTN (virtual tenant network) which is a virtual network established on the controller in units of tenants.

### (Supplementary Note 7)

A location optimization server, including:
a device configured to manage virtual-machine-operating servers on which a virtual machine providing a service for a client terminal operates; and
a device configured to order a migration of the virtual machine to a destination virtual-machine-operating server selected depending on location coordinate information related to the client terminal.

### (Supplementary Note 8)

The location optimization server set forth in supplementary note 7, further including:
a device configured to, when receiving an inquiry for the destination virtual-machine-operating server from the client terminal, refer to management information of the virtual machine operating servers and to check whether destination candidates exist in the management information, based on the location coordinates information related to the client terminal,
a device configured to, when any destination candidates are found in the management information, define listing information as information of the destination candidates;
a device configured to, when no destination candidates are found in the management information, calculate destination candidates based on the location coordinate information related to the client terminal and define listing information as information of the calculated destination candidates;
a device configured to order a migration of the virtual machine to the destination virtual-machine-operating server specified based on the listing information;
a device configured to receive a migration completion notification of the virtual machine from the specified virtual-machine-operating server;
a device configured to update the management information of the virtual-machine-operating servers; and
a device configured to transmit a migration completion notification of the virtual machine to the client terminal.

### (Supplementary Note 9)

The location optimization server set forth in supplementary note 8, further including:
a device configured to, before a movement of the client terminal, obtain location coordinates information of a movement destination of the client terminal in advance; and
a device configured to order a migration of the virtual machine to a virtual-machine-operating server selected depending on the location coordinates information of the movement destination.

### (Supplementary Note 10)

The location optimization server set forth in any one of supplementary notes 7 to 9, further including:
a device configured to transmit line quality monitoring packets to candidates of the destination virtual-machine-operating server, to receive responses, and to measure and take statistics of a line quality based on the responses,
a device configured to specify the destination virtual-machine-operating server as results of the measurement and the taken statistics of the line quality, and to issue an order for a migration of the virtual machine to the specified virtual-machine-operating server.

### (Supplementary Note 11)

A client terminal, including:
a device configured to obtain location coordinates information thereof and to make an inquiry to a location optimization server for a destination virtual-machine-operating server, on the basis of the location coordinates information;
a device configured to receive listing information indicative of candidates of the destination virtual-machine-operating server from the location optimization server; and
a device configured to specify the destination virtual-machine-operating server based on the listing information and to make a request to the location optimization server for a migration of a virtual machine to the specified destination virtual-machine-operating server.

### (Supplementary Note 12)

The client terminal set forth in supplementary note 11, further including:
a device configured to transmit line quality monitoring packets to candidates of the destination virtual-machine-operating server, to receive responses, and to measure and take statistics of a line quality based on the responses,
a device configured to specify the destination virtual-machine-operating server as results of the measurement and the statistics of the line quality, and to issue an order for a migration of the virtual machine to the specified virtual-machine-operating server.

### (Supplementary Note 13)

A computer-implemented virtual machine management method, including:
managing virtual-machine-operating servers on which a virtual machine providing a service for a client terminal operates; and
ordering a migration of the virtual machine to a destination virtual-machine-operating server selected depending on location coordinates information related to the client terminal.

### (Supplementary Note 14)

The virtual machine management method set forth in supplementary note 13, further including:
when receiving an inquiry for the destination virtual-machine-operating server from the client terminal, referring to management information of virtual machine operating servers to check whether destination candidates exist in the management information, based on the location coordinates information related to the client terminal;
when any destination candidates are found in the management information, defining listing information as information of the destination candidates;
when no destination candidates are found in the management information, calculating destination candidates based on the location coordinate information related to the client terminal to define listing information as information of the calculated destination candidates;
ordering a migration of the virtual machine to the destination virtual-machine-operating server specified based on the listing information;
receiving a migration completion notification of the virtual machine from the specified virtual-machine-operating server;
updating the management information of the virtual-machine-operating servers; and
transmitting a migration completion notification of the virtual machine to the client terminal.

### (Supplementary Note 15)

The virtual machine management method set forth in supplementary note 14, further including:
before a movement of the client terminal, obtaining location coordinates information of a movement destination of the client terminal in advance; and
ordering a migration of the virtual machine to a virtual-machine-operating server selected depending on the location coordinates information of the movement destination.

### (Supplementary Note 16)

The virtual machine management method set forth in any one of supplementary notes 13 to 15, further including:
transmitting line quality monitoring packets to candidates of the destination virtual-machine-operating server and receiving responses to measure and take statistics of a line quality based on the responses,
specifying the destination virtual-machine-operating server as results of the measurement and the taken statistics of the line quality to issue an order for a migration of the virtual machine to the specified virtual-machine-operating server.

### (Supplementary Note 17)

A program which causes a computer to perform steps of:
obtaining location coordinates information thereof and making an inquiry to a location optimization server for a destination virtual-machine- operating server, on the basis of the location coordinates information;
receiving listing information indicative of candidates of the destination virtual-machine-operating server from the location optimization server; and
specifying the destination virtual-machine-operating server based on the listing information to make a request to the location optimization server for a migration of a virtual machine to the specified destination virtual-machine-operating server.

### (Supplementary Note 18)

The program set forth in supplementary note 17, wherein the program further causes the computer to perform steps of:
transmitting line quality monitoring packets to candidates of the destination virtual-machine-operating server and receiving responses to measure and take statistics of a line quality based on the responses; and
specifying the destination virtual-machine-operating server as results of the measurement and the statistics of the line quality, and to issue an order for a migration of the virtual machine to the specified virtual-machine-operating server.

### <Note>

Although exemplary embodiments of the present invention are described above in details, actual implementations are not limited to the above-described exemplary embodiments; the present invention encompasses modifications which are not away from the principle of present invention.

The present patent application claims the priority based on Japanese patent application No. 2011-070481 and the disclosure of Japanese patent application No. 2011-070481 is incorporated herein by reference.

## Claims

1. A virtual machine management system, comprising:
a client terminal;
virtual-machine-operating servers on which a virtual machine providing a service for said client terminal operates; and
a location optimization server which orders a migration of said virtual machine to a destination virtual-machine-operating server selected depending on location coordinates information related to said client terminal.

2. The virtual machine management system according to claim 1, wherein said client terminal includes:
means for obtaining location coordinates information thereof and making an inquiry to said location optimization server for the destination virtual-machine-operating server, based on the location coordinates information;
means for receiving listing information indicative of candidates of the destination virtual-machine-operating server from the location optimization server; and
means for specifying the destination virtual-machine-operating server based on said listing information and making a request to said location optimization server for a migration of said virtual machine to said specified destination virtual-machine-operating server.

3. The virtual machine management system according to claim 2, wherein said location optimization server includes:
means for, when receiving the inquiry for the destination virtual-machine-operating server from said client terminal, referring to management information of said virtual machine operating servers and checking whether destination candidates exist in the management information, based on the location coordinates information related to said client terminal;
means for, when any destination candidates are found in the management information, defining said listing information as information of the destination candidates;
means for, when no destination candidates are found in the management information, calculating destination candidates based on the location coordinate information related to said client terminal and defining said listing information as information of said calculated destination candidates;
means for ordering a migration of said virtual machine to the destination virtual-machine-operating server specified based on said listing information;
means for receiving a migration completion notification of said virtual machine from said specified virtual-machine-operating server;
means for updating the management information of said virtual-machine-operating servers in response to the migration completion notification of said virtual machine; and
means for transmitting a migration completion notification of said virtual machine to said client terminal.

4. The virtual machine management system according to claim 3, wherein said location optimization server further includes:
means for obtaining location coordinates information of a movement destination of said client terminal in advance before a movement of said client terminal; and
means for ordering a migration of said virtual machine to a virtual-machine-operating server selected depending on the location coordinates information of said movement destination.

5. The virtual machine management system according to any one of claims 1 to 4, wherein at least one of said client terminal and said location optimization server is configured to transmit line quality monitoring packets to candidates of said destination virtual-machine-operating server, to receive responses, to measure and take statistics of a line quality based on the responses, to specify the destination virtual-machine-operating server as results of the measurement and the statistics of said line quality, and to issue an order for a migration of said virtual machine to said specified virtual-machine-operating server.

6. The virtual machine management system according to any one of claims 1 to 5, wherein said virtual-machine-operating server includes an OpenFlow controller, and
wherein said virtual machine provides a service related to a VTN (virtual tenant network) which is a virtual network established on said controller in units of tenants.

7. A location optimization server, comprising:
means for managing virtual-machine-operating servers on which a virtual machine providing a service for a client terminal operates; and
means for ordering a migration of said virtual machine to a destination virtual-machine-operating server selected depending on location coordinate information related to said client terminal.

8. A client terminal, comprising:
means for obtaining location coordinates information thereof and making an inquiry to a location optimization server for a destination virtual-machine-operating server, based on the location coordinates information;
means for receiving listing information indicative of candidates of the destination virtual-machine-operating server from said location optimization server; and
means for specifying the destination virtual-machine-operating server based on said listing information and making a request to said location optimization server for a migration of a virtual machine to said specified destination virtual-machine-operating server.

9. A computer-implemented virtual machine management method, comprising:
managing virtual-machine-operating servers on which a virtual machine providing a service for a client terminal operates; and
ordering a migration of said virtual machine to a destination virtual-machine-operating server selected depending on location coordinates information related to said client terminal.

10. A recording medium storing a program which causes a computer to perform steps of:
obtaining location coordinates information thereof and making an inquiry to a location optimization server for a destination virtual-machine- operating server, based on the location coordinates information;
receiving listing information indicative of candidates of the destination virtual-machine-operating server from said location optimization server; and
specifying the destination virtual-machine-operating server based on said listing information to make a request to said location optimization server for a migration of said virtual machine to said specified destination virtual-machine-operating server.
